# EUROPEAN PATENT APPLICATION

(11) **EP 4 556 133 A1**
(43) Date of publication of application: **21.05.2025**
(21) Application number: 24000133.9
(22) Date of filing: 15.11.2024
(51) Int. Cl.: B21C 1/00, B21C 37/04, B23K 35/02, B23K 35/30, B23K 35/40

(54) **MULTIMETAL WIRES FOR USE IN WELDING AND THE METHOD OF THEIR PRODUCTION**

(30) Priority: 15.11.2023 PL 44674123
(71) Applicant: Siec Badawcza Lukasiewicz - Instytut Metali Niezelaznych, 44-100 Gliwice (PL)
(72) Inventor: Marszowski, Krzysztof, 44-100 Gliwice (PL); Kalabis, Jaroslaw, 43-178 Ornontowice (PL); Kowalski, Aleksander, 44-100 Gliwice (PL); Kulasa, Joanna, 42-500 Bedzin (PL)

(57) **Abstract**

A method of producing a multimetal wire containing CuAI, characterized in that in the first stage five sections of aluminium wires of the same length and with a diameter of ø2.15 mm each are placed directly in a thin-walled copper tube with a diameter of ø8 mm and a wall thickness of 0.8 mm, drawn to a diameter of ø2.15 mm while maintaining changes of drawing die diameter of 0.25 mm, followed by a second stage which includes repeating the first stage.

## Description

The subject of the invention is multimetal wires for the use in welding and the method of their production. Until now, aluminium bronze wires with an aluminium content of 8% by weight have been used. The invention makes it possible to obtain materials with a higher aluminium content without the need for a casting process that is impossible to perform (for such a high aluminium content in copper). Casting of such materials is not possible due to the lower casting properties caused by the high aluminium content. The invention allows to obtain welding materials with improved mechanical properties, corrosion resistance and good weldability. Welding can be carried out using lower current settings on a TIG welder.

There is a solution known from the publication of Dong, B.; Pan, Z.; Shen, C.; Ma, Y.; Li, H. "Fabrication of Copper-Rich Cu-Al Alloy Using the Wire-Arc Additive Manufacturing Process" concerning alloying of materials by simultaneously feeding two of them to the liquid weld pool using two separate wire feeders. In the publication of Qing-ke, Z.; Jie, Y.; Wen-Sheng, S.; Zhen-Lun, S. "Evolution in microstructure and mechanical properties of Cu alloy during wire and arc additive manufacturing" printing using CuAl8 is presented together with the presentation of the material characteristics in terms of the properties of the padding welds after the welding process.

The effect of the Hot Isostatic Pressing (HIP) process on the structure, mechanical properties and corrosion resistance of padding welds made of aluminium bronze - CuAl7 and CuAl2 (multimetal wire) in TIG process is known from the publication by J. Kalabis et al. entitled: "Properties of Padding Welds Made of CuAl2 Multiwire and CuAl7 Wire in TIG Process". The filler weld made of multi-fibre CuAl2 material subjected to the HIP process is characterized by improved density. In addition, homogenization of hardness results was also observed throughout the sample. The average hardness of the sample after the HIP process decreased by about 15HV. The electrical conductivity of the welded CuAl2 sample increased after the HIP process. As a result of this process, a visible increase in electrical conductivity was observed in the case of the sample made of multi-wire CuAl2.

The use of multi-metal wires with a multi-fibre structure in the welding process allows for the production of padding welds using lower currents and voltages during welding. Additionally, it is possible to produce a multi-fibre wire characterized by properties adapted to the needs of the customer. This is possible by using the plastic working of wires and tubes, skipping the expensive continuous casting process.

The essence of the invention is the method of producing a multimetal wire with a CuAl content, characterized in that in the first stage five sections of aluminium wires of the same length and with a diameter of ø2.15 mm each are placed directly in a thin-walled copper tube with a diameter of ø8 mm and a wall thickness of 0.8 mm, drawn to a diameter of ø2.15 mm while maintaining changes of drawing die diameter of 0.25 mm, followed by a second stage, which involves repeating the first stage.

The multimetal wire contains Al 12% by mass and the rest is Cu.

The method according to the invention is presented in the following manufacturing example.

CuAl multifilament wires with increased Al content of 12% by mass were produced. The preparation process included two stages of bundling. Stage I included placing 5 sections of aluminium (Al) wires of the same length and diameters of ø2.15 mm each directly into a thin-walled copper (Cu) tube with a diameter of ø8 mm and a wall thickness of 0.8 mm and drawing using a bench drawing machine to a diameter of ø2.15 mm. The changes of drawing die diameter were 0.25 mm. In the second stage, the wires obtained from stage I were placed in 5 sections of the same length directly into a thin-walled copper (Cu) tube with a diameter of ø8 mm and a wall thickness of 0.8 mm and drawn according to the drawing scheme from stage I. In this way, CuAl12 material with an aluminium content of 12% by mass was obtained.

## Claims

1. A method of producing a multimetal wire containing CuAl, **characterized in that** in the first stage five sections of aluminium wires of the same length and with a diameter of ø2.15 mm each are placed directly in a thin-walled copper tube with a diameter of ø8 mm and a wall thickness of 0.8 mm, drawn to a diameter of ø2.15 mm while maintaining changes of drawing die diameter of 0.25 mm, followed by a second stage, which includes repeating the first stage.

2. A multimetal wire obtained by the method according to claim 1, **characterized in that** it contains 12% Al by mass and the rest is Cu.
